# EUROPEAN PATENT APPLICATION

(11) **EP 4 769 123 A1**
(43) Date of publication of application: **01.07.2026**
(21) Application number: 25222148.6
(22) Date of filing: 10.12.2025
(51) Int. Cl.: G06F 8/65, G06F 9/48, G06F 8/656

(54) **CONTROL DEVICE AND UPDATE METHOD**

(30) Priority: 27.12.2024 JP 2024232707
(71) Applicant: Yokogawa Electric Corporation, Musashino-shi, Tokyo 180-8750 (JP)
(72) Inventor: YAMADA, Hidemaro, Musashino-shi, Tokyo, 180-8750 (JP); TORIUMI, Shouhei, Musashino-shi, Tokyo, 180-8750 (JP)
(74) Representative: Winter, Brandl - Partnerschaft mbB

(57) **Abstract**

A control device (1) includes a ROM (2) that stores therein programs, a processor (3), and an output circuit (4). The processor includes a plurality of cores (10) that load the respective programs from the ROM (2) and execute the respective loaded programs. The output circuit outputs (4), in a case where one program out of the plurality of programs stored in the ROM (2) has been updated, an interrupt signal to the core (10) that executes the one program. The core (10) reloads the updated program stored in the ROM (2) in a case where the core (10) has detected the interrupt signal.

## Description

### BACKGROUND OF THE INVENTION

### 1. Field of the Invention

The present invention relates to a control device and an update method.

### 2. Description of the Related Art

A control device, such as a central processing unit (CPU) module, includes a read only memory (ROM) that stores therein a plurality of programs, and a multi-core MPU that includes a first core and a second core. The multi-core MPU resets the programs running in all of the cores in accordance with a reset signal, and reloads the programs stored in the ROM into each of the cores.

Patent Document 1: Japanese Laid-open Patent Publication No. 2016-85499

When the programs are updated, the programs running in all of the cores included in the same multi-core MPU is to be suspended. However, in the conventional control device, for example, it is not possible to continue status monitoring by using a function of each of the cores that takes a role of a monitoring function while updating the programs stored in the cores each of which takes a role of a control function. In other words, in the control device, it is not possible to update a program that is running in a core included in the same multi-core MPU while continuing the execution of a program running in another core included in the multi-core MPU.

Accordingly, it is an object in one aspect of an embodiment of the invention to provide a control device and the like capable of continuing execution of a program that is running in a core while updating a program that is running in another core.

### SUMMARY OF THE INVENTION

According to an aspect of an embodiment, a control device (1) includes a ROM (2) that stores therein programs, a processor (3), and an output circuit (4). The processor includes a plurality of cores (10) that load the respective programs from the ROM (2) and execute the respective loaded programs. The output circuit outputs (4), in a case where one program out of the plurality of programs stored in the ROM (2) has been updated, an interrupt signal to the core (10) that executes the one program. The core (10) reloads the updated program stored in the ROM (2) in a case where the core (10) has detected the interrupt signal.

According to an aspect of an embodiment, an update method is implemented by a control device (1). The control device (1) includes a read only memory (ROM) (2) that stores therein programs, and a processor (3) that includes a plurality of cores (10) that load the respective programs from the ROM and that execute the respective loaded programs. The update method includes outputting, in a case where one program out of the plurality of programs stored in the ROM has been updated, an interrupt signal to the core that executes the one program. The update method includes reloading the updated program stored in the ROM in a case where the core has detected the interrupt signal.

### BRIEF DESCRIPTION OF THE DRAWINGS

FIG. 1 is a block diagram illustrating one example of a control device according to a first embodiment;
FIG. 2 is a flowchart illustrating one example of a processing operation performed in each of a first core that is involved in a first update process and a second core that is involved in a second update process;
FIG. 3 is a timing chart illustrating one example of a processing operation of each of the first core, the second core, and a ROM when a first program that has been updated is reloaded with respect to the first core;
FIG. 4 is a block diagram illustrating one example of a control device according to a second embodiment;
FIG. 5 is a block diagram illustrating one example of a control device according to a third embodiment;
FIG. 6 is a block diagram illustrating one example of a control device according to a fourth embodiment;
FIG. 7 is a flowchart illustrating one example of a processing operation performed in each of a first core group involved in a first core group update process and a second core group involved in a second core group update process;
FIG. 8 is a block diagram illustrating one example of a control device according to a fifth embodiment; and
FIG. 9 is a flowchart illustrating one example of a processing operation performed in each of the first core and the second core included in the first core group involved in a third update process.

### DETAILED DESCRIPTION OF THE PREFERRED EMBODIMENTS

Hereinafter, preferred embodiments of a control device and the like disclosed in the present application will be described in detail below with reference to the accompanying drawings. Furthermore, the disclosed technology is not limited to the embodiments. In addition, each of the embodiments can be used in any appropriate combination as long as they do not conflict with each other.

### First Embodiment

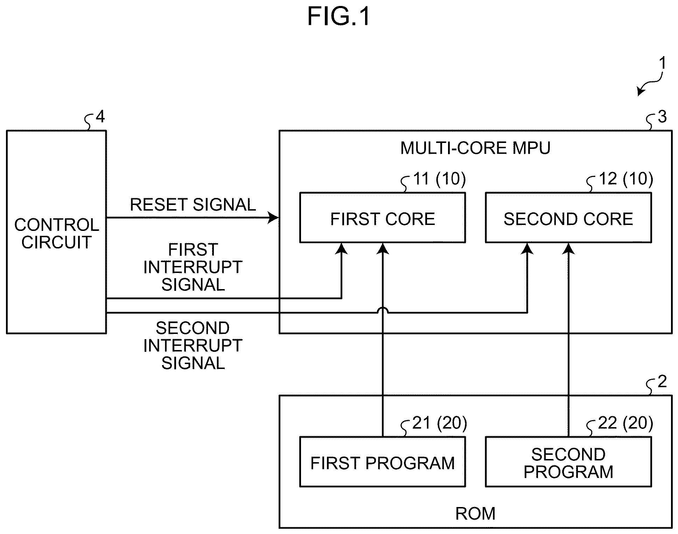

FIG. 1 is a block diagram illustrating one example of a control device 1 according to a first embodiment. The control device 1 illustrated in FIG. 1 includes a read only memory (ROM) 2, a multi-core MPU 3, and a control circuit 4. The control device 1 is an example in which functions of, for example, control, communication, monitoring, and the like are shared for each core 10 with an asymmetric multiprocessing (AMP) configuration that is constituted such that the multi-core MPU 3 is executed by all of the cores.

The ROM 2 is a nonvolatile memory that stores therein a plurality of programs 20 denoted by, for example, a first program 21 and a second program 22, and that is arranged an outside of the multi-core MPU 3. Further, the ROM 2 may be arranged inside the multi-core MPU 3, and appropriate modifications are possible.

The multi-core MPU 3 is a processor that includes the plurality of cores 10 denoted by, for example, a first core 11 and a second core 12, and that executes the programs 20 for each of the cores 10. Further, for example, the programs 20 are various kinds of programs used for applications, an operation system (OS) that operates an application, or the like.

The control circuit 4 is a circuit that controls the multi-core MPU 3. The control circuit 4 outputs a reset signal that activates the multi-core MPU 3 to the multi-core MPU 3. The control circuit 4 is an output circuit that outputs, in a case where one of the programs 20 included in the plurality of programs 20 stored in the ROM 2 has been updated, an interrupt signal to the core 10 that executes the subject program 20.

The control circuit 4 outputs a first interrupt signal to the first core 11 that is included in the multi-core MPU 3. The first interrupt signal is an interrupt signal for updating the first program 21 that is running in the first core 11 while continuing the execution of the second program 22 that is running in the second core 12. The control circuit 4 outputs a second interrupt signal to the second core 12 that is included in the multi-core MPU 3. The second interrupt signal is an interrupt signal for updating the second program 22 that is running in the second core 12 while continuing the execution of the first program 21 that is running in the first core 11.

The multi-core MPU 3 resets all of the cores 10 in accordance with, for example, the reset signal, loads the first program 21 that is stored in the ROM 2 into the first core 11, and also loads the second program 22 that is stored in the ROM 2 into the second core 12. The first core 11 executes the loaded first program 21, and the second core 12 ends up executing the loaded second program 22.

For example, it is assumed that the first program 21 stored in the ROM 2 is updated due to a version upgrade or the like and it is assumed that the first program 21 that has been updated is stored in the ROM 2. The control circuit 4 outputs the first interrupt signal to the first core 11 that is included in the multi-core MPU 3 and that executes the first program 21 that has not been updated. In a case where the first core 11 has detected the first interrupt signal, the first core 11 reloads the first program 21 that has been updated and that is stored in the ROM 2. At this time, the second core 12 is able to continue the execution of the second program 22 even when the first program 21 is being updated by the first core 11.

For example, it is assumed that the second program 22 stored in the ROM 2 has been updated, and it is assumed that the second program 22 that has been updated is stored in the ROM 2. The control circuit 4 outputs the second interrupt signal to the second core 12 that is included in the multi-core MPU 3 and that is executing the second program 22 that has not been updated. In a case where the second core 12 has detected the second interrupt signal, the second core 12 reloads the second program 22 that has been updated and that is stored in the ROM 2. At this time, the first core 11 is able to continue the execution of the first program 21 even when the second program 22 is being updated by the second core 12.

### Operation of control device

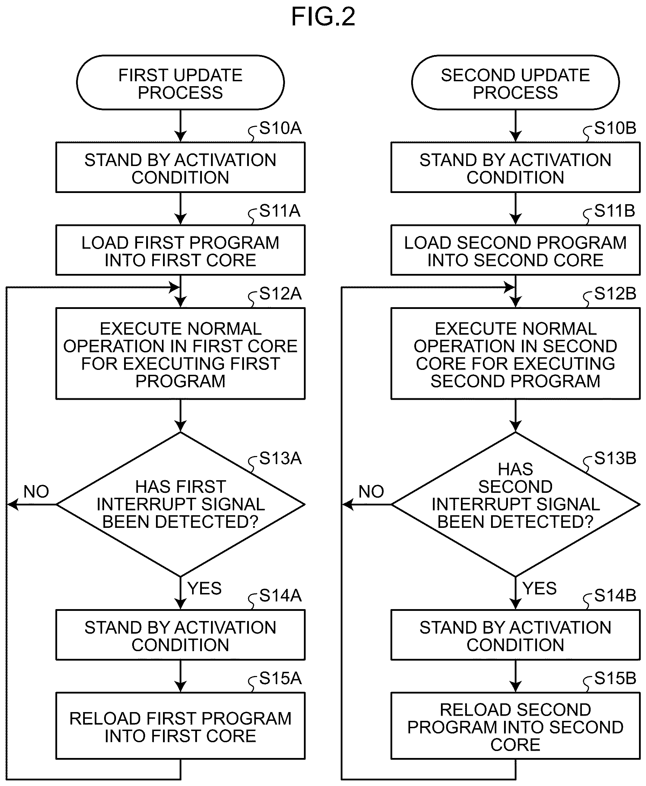

FIG. 2 is a flowchart illustrating one example of a processing operation performed in each of the first core 11 that is involved in a first update process and the second core 12 that is involved in a second update process. It is assumed that the multi-core MPU 3 executes in parallel the first update process performed in the first core 11 and the second update process performed in the second core 12.

The first update process is a process of updating, for example, the first program 21 performed in the first core 11. In FIG. 2, the first core 11 stands by, for example, in accordance with activation until an activation condition that a device to be used becomes available is satisfied (Step S10A). Further, the activation condition is a condition, for example, whether or not initialization of a register has been completed. After the first core 11 has stood by the activation condition indicated at Step S10A, the first core 11 loads the first program 21 that has not been updated and that is stored in the ROM 2 (Step S11A). The first core 11 executes a normal operation that executes the loaded first program 21 (Step S12A).

The first core 11 determines whether or not the first interrupt signal has been detected during the execution of the normal operation (Step S13A). In a case where the first core 11 has detected the first interrupt signal (Yes at Step S13A), the first core 11 determines that the first program 21 stored in the ROM 2 has been updated, and stands by until a predetermined activation condition is satisfied (Step S14A). Further, the predetermined activation condition is a condition whether or not, for example, a period of time has elapsed until the first program 21 is able to be reloaded after the first interrupt signal has been detected.

After the first core 11 has stood by until the predetermined activation condition is satisfied, the first core 11 reloads the first program 21 that has been updated and that is stored in the ROM 2 (Step S15A), and proceeds to the process at Step S12A in order to start the normal operation that executes the first program 21 that has been updated.

Furthermore, in a case where the first core 11 does not detect the first interrupt signal (No at Step S13A), the first core 11 proceeds to the process at Step S12A in order to continue the normal operation that executes the first program 21.

The second update process is a process of updating, for example, the second program 22 performed in the second core 12. The second core 12 stands by, for example, in accordance with activation, until the activation condition that a device to be used becomes available is satisfied (Step S10B). Further, the activation condition is a condition, for example, whether or not initialization of a register has been completed. After the second core 12 has stood by the activation condition indicated at Step S10B, the second core 12 loads the second program 22 that has not been updated and that is stored in the ROM 2 (Step S11B). The second core 12 executes a normal operation that executes the loaded second program 22 (Step S12B).

The second core 12 determines whether or not the second interrupt signal has been detected during the execution of the normal operation (Step S13B). In a case where the second core 12 has detected the second interrupt signal (Yes at Step S13B), the second core 12 determines that the second program 22 stored in the ROM 2 has been updated, and stands by until a predetermined activation condition is satisfied (Step S14B).

After the second core 12 stood by until the predetermined activation condition is satisfied, the second core 12 reloads the second program 22 that has been updated and that is stored in the ROM 2 (Step S15B), and proceeds to the process at Step S12B in order to start the normal operation that executes the second program 22 that has not been updated.

Furthermore, in a case where the second core 12 does not detect the second interrupt signal (No at Step S13B), the second core 12 proceeds to the process at Step S12B in order to continue the normal operation that executes the second program 22.

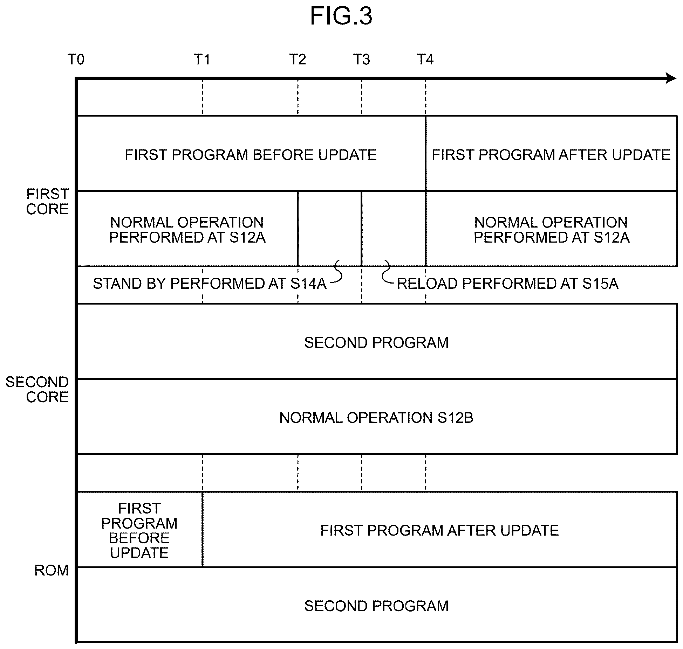

FIG. 3 is a timing chart illustrating one example of a processing operation performed in each of the first core 11, the second core 12, and the ROM 2 when the updated first program 21 is reload into the first core 11. A timing T0 illustrated in FIG. 3 indicates a state in which the first program 21 and the second program 22 before update are stored in the ROM 2. In addition, a timing T0 indicates a state in which the first core 11 continues the normal operation that executes the first program 21 at Step S12A and the second core 12 continues the normal operation that executes the second program 22 at Step S12B.

A timing T1 is a timing at which the first program 21 stored in the ROM 2 has been updated. The timing T1 indicates a state in which the first core 11 continues, at Step S12A, the normal operation for executing the first program 21 that has not been updated and the second core 12 continues, at Step S12B, the normal operation for executing the second program 22.

A timing T2 is a timing at which the first core 11 has detected the first interrupt signal, and is a state in which the first core 11 stands by, at Step S14A, until the activation condition is satisfied after having detected the first interrupt signal. At this time, the second core 12 continues the normal operation in which the second core 12 executes the second program 22 at Step S12B.

A timing T3 is a state in which, after the first core 11 has stood by until the activation condition is satisfied, the first core 11 reloads the first program 21 that has been updated and that is stored in the ROM 2 at Step S15A. At this time, the second core 12 continues the normal operation in which the second core 12 executes the second program 22 at Step S12B.

Then, a timing T4 is a state in which, after the first core 11 has reloaded the first program 21 that has been updated, the first core 11 continues the normal operation for executing the reloaded first program 21. At this time, the second core 12 continues the normal operation in which the second core 12 executes the second program 22 at Step S12B.

In other words, the second core 12 included in the multi-core MPU 3 is able to continue an execution operation of the second program 22 even when the first program 21 that has been updated with respect to the first core 11 is being updated.

### Effects of the first embodiment

The control circuit 4 included in the control device 1 according to the first embodiment outputs the first interrupt signal to the first core 11 in a case where the first program 21 stored in the ROM 2 has been updated. In a case where the first core 11 had detected the first interrupt signal, the first core 11 reloads the first program 21 that has been updated from the ROM 2, and executes the reloaded first program 21. At this time, the first core 11 updates the first program 21, whereas the second core 12 continues the execution of the second program 22. As a result of this, the control device 1 is able to continue the execution of the second program 22 that is running in the second core 12 included in the same multi-core MPU 3 while updating the first program 21 that is running in the first core 11.

Furthermore, the control circuit 4 outputs the second interrupt signal to the second core 12 in a case where the second program 22 stored in the ROM 2 has been updated. In a case where the second core 12 detects the second interrupt signal, the second core 12 reloads the updated second program 22 from the ROM 2, and executes the reloaded second program 22. At this time, the second core 12 updates the second program 22, whereas the first core 11 continues the execution of the first program 21. As a result of this, the control device 1 is able to continue the execution of the first program 21 that is running in the first core 11 included in the same multi-core MPU 3 while updating the second program 22 that is running in the second core 12.

The control device 1 continues the execution of the second program 22 that is running in the second core 12 included in the same multi-core MPU 3 while updating the first program 21 that is running in the first core 11. In addition, the control device 1 continues the execution of the first program 21 that is running in the first core 11 included in the same multi-core MPU 3 while updating the second program 22 that is running in the second core 12. As a result of this, it is possible to update all of the programs (including the OS) running in the respective cores 10 that are included in the same multi-core MPU 3 without affecting the programs 20 running in the other cores 10 included in the multi-core MPU 3.

The control device 1 is able to update the programs 20 running in the other core 10 included in the same multi-core MPU 3 without affecting the function shared by the core 10 included in the multi-core MPU 3 in the configuration in which each of the cores 10 that are included in the multi-core MPU 3 and that are shared in the functions of control, communication, monitoring, and the like.

The control device 1 is required to continue the operation over an extended period of time, so that it is conceivable that there is a need to update the programs 20 including the OS for the purpose of a defect correction, a functionality expansion, or the like in operation. Even in that case, the control device 1 is able to maintain some of the function without stopping the entire of the multi-core MPU 3. For example, even in a period of time for which the program 20 stored in the core 10 that takes a role of the control function is being updated, the control device 1 is able to maintain the function of the core 10 that takes a role of the monitoring function, so that the control device 1 is able to continue the status monitoring while updating the programs 20.

Further, for convenience of description, the case has been described as an example in which the multi-core MPU 3 includes a plurality of cores, for example, the two cores 10, but the embodiments are not limited to this example as long as two or more of the cores 10 may be provided, and appropriate modifications are possible. Furthermore, the case has been described as an example in which the two programs 20 are used for the programs 20 stored in the ROM 2, but the embodiments are not limited to this example, and appropriate modifications are possible.

Further, the case has been described as an example in which the control device 1 according to the first embodiment is constituted to include the control circuit 4 and the multi-core MPU 3 as different units, but the embodiments are not limited to this example, and an embodiment thereof will be described below as a second embodiment.

### Second Embodiment

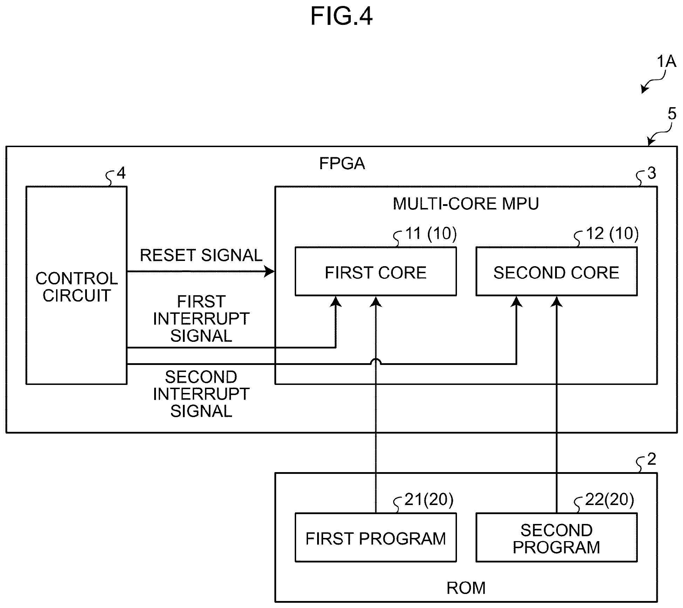

FIG. 4 is a block diagram illustrating one example of a control device 1A according to the second embodiment. Further, by assigning the same reference numerals to components having the same configuration as those in the control device 1 according to the first embodiment, overlapped descriptions of the configuration and the operation thereof will be omitted. The control device 1A illustrated in FIG. 4 is different from the control device 1 illustrated in FIG. 1 in that the control device 1A includes a field programmable gate array (FPGA) 5 on which the multi-core MPU 3 and the control circuit 4 are mounted.

### Effects of second embodiment

The control device 1A according to the second embodiment includes the FPGA 5 on which the multi-core MPU 3 and the control circuit 4 are mounted. As a result of this, it is possible to mount the multi-core MPU 3 and the control circuit 4 on the same chip, it is further effective in reducing the number of parts and wiring. Even when a functionality expansion of the multi-core MPU 3 is needed to integrate a plurality of functions to a single unit of the multi-core MPU 3, it is possible to easily add a circuit that is used for an additional function.

Further, in the control device 1 according to the first embodiment, the case has been described as an example in which an interrupt signal is output from the control circuit 4 to both of the first core 11 and the second core 12 that are included in the multi-core MPU 3. However, it may be possible for each of the cores 10 to output an interrupt signal in a case in which an update of the program 20 stored in the ROM 2 has been detected by the core 10 included in the multi-core MPU 3. Therefore, the embodiment thereof will be described below as a third embodiment.

### Third Embodiment

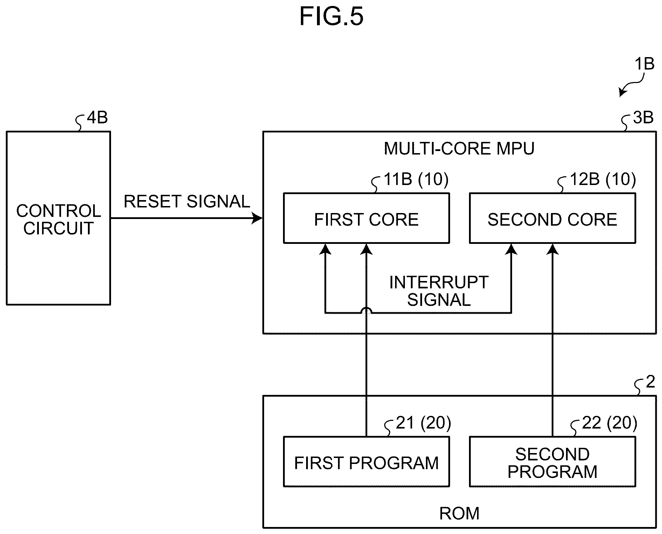

FIG. 5 is a block diagram illustrating one example of a control device 1B according to the third embodiment. Further, by assigning the same reference numerals to components having the same configuration as those in the control device 1 according to the first embodiment, overlapped descriptions of the configuration and the operation thereof will be omitted. The control device 1B illustrated in FIG. 5 is different from the control device 1 illustrated in FIG. 1 in that each of a first core 11B and a second core 12B that are included in a multi-core MPU 3B detects an update of the program 20 stored in the ROM 2, and the first core 11B and the second core 12B output interrupt signals each other.

The control device 1B illustrated in FIG. 5 includes the ROM 2, the multi-core MPU 3B, and a control circuit 4B. The multi-core MPU 3B includes the first core 11B and the second core 12B that are the plurality of cores that are, for example, the two cores 10.

The second core 12B outputs the first interrupt signal to the first core 11B in a case where the first program 21 stored in the ROM 2 has been updated. In a case where the first core 11B has detected the first interrupt signal, the first core 11B reloads the first program 21 that has been updated and that is stored in the ROM 2. At this time, the second core 12B is able to continue the execution of the second program 22 even when the first program 21 is being updated by the first core 11B.

The first core 11B outputs the second interrupt signal to the second core 12B in a case where the second program 22 stored in the ROM 2 has been updated. In a case where the second core 12B has detected the second interrupt signal, the second core 12B reloads the second program 22 that has been updated and that is stored in the ROM 2. At this time, the first core 11B is able to continue the execution of the first program 21 even when the second program 22 is being updated by the second core 12B.

### Effects of third embodiment

The second core 12B included in the control device 1B according to the third embodiment outputs the first interrupt signal to the first core 11B in a case where the first program 21 stored in the ROM 2 has been updated. In a case where the first core 11B has detected the first interrupt signal, the first core 11B reloads the updated first program 21 from the ROM 2, and executes the reloaded first program 21. At this time, the first core 11B updates the first program 21, whereas the second core 12B continues the execution of the second program 22. As a result of this, the control device 1B is able to continue the execution of the second program 22 that is running in the second core 12B included in the same multi-core MPU 3B while updating the first program 21 that is running in the first core 11B.

Furthermore, the first core 11B outputs the second interrupt signal to the second core 12B in a case where the second program 22 stored in the ROM 2 is updated. In a case where the second core 12B has detected the second interrupt signal, the second core 12B reloads the updated second program 22 from the ROM 2, and executes the reloaded second program 22. At this time, the second core 12B updates the second program 22, whereas the first core 11B continues the execution of the first program 21. As a result of this, the control device 1B is able to continue the execution of the first program 21 that is running in the first core 11B that is included in the same multi-core MPU 3B while updating the second program 22 that is running in the second core 12B.

The control device 1B is able to update all of the programs (including the OS) running in the other cores 10 that are included in the same multi-core MPU 3B without affecting the program 20 that is running in the core 10 included in the multi-core MPU 3B.

Further, the case has been described as an example in which the control device 1 according to the first embodiment causes the program 20 to be executed for each of the cores 10 included in the multi-core MPU 3. However, the embodiments are not limited to this example. The program 20 may be executed in each of the plurality of core groups included in the same multi-core MPU 3, and the embodiment thereof will be described below as a fourth embodiment.

### Fourth Embodiment

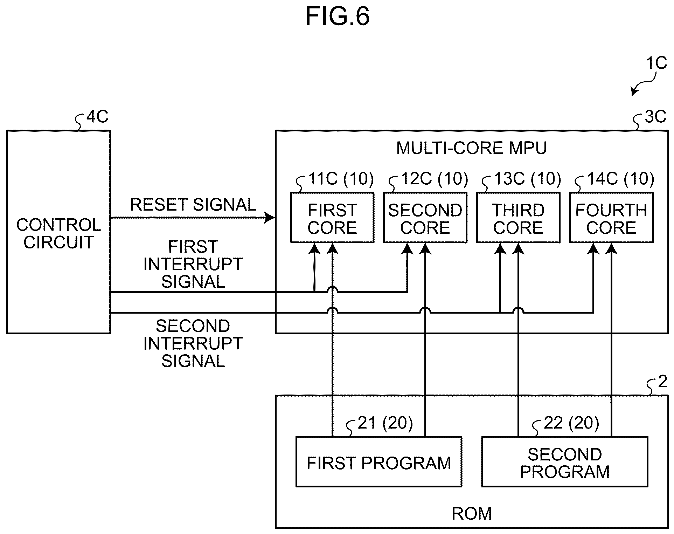

FIG. 6 is a block diagram illustrating one example of a control device 1C according to the fourth embodiment. Further, by assigning the same reference numerals to components having the same configuration as those in the control device 1 according to the first embodiment, overlapped descriptions of the configuration and the operation thereof will be omitted. The control device 1C illustrated in FIG. 6 includes the ROM 2, a multi-core MPU 3C, and a control circuit 4C. The ROM 2 stores therein the first program 21 and the second program 22. The multi-core MPU 3C includes four cores that are, for example, a first core 11C, a second core 12C, a third core 13C, and a fourth core 14C. It is assumed that the first core 11C and the second core 12C are included in a first core group, and it is assumed that the third core 13C and the fourth core 14C are included in a second core group.

Each of the first core 11C and the second core 12C included in the first core group loads the first program 21 that is stored in the ROM 2, and executes the loaded first program 21. Each of the third core 13C and the fourth core 14C included in the second core group loads the second program 22 that is stored in the ROM 2, and executes the loaded second program 22.

For example, it is assumed that the first program 21 stored in the ROM 2 has been updated and the first program 21 that has been updated is stored in the ROM 2. At this time, the first core 11C and the second core 12C that are included in the multi-core MPU 3C and that are executing the first program 21 are the cores corresponding to the update targets. The control circuit 4C outputs the first interrupt signal to the first core 11C and the second core 12C that are included in the multi-core MPU 3C that are executing the first program 21. In a case where each of the first core 11C and the second core 12C has detected the first interrupt signal, each of the first core 11C and the second core 12C reloads the first program 21 that has been updated and that is stored in the ROM 2. At this time, each of the third core 13C and the fourth core 14C is able to continue the execution the second program 22 even when the first program 21 is being updated by each of the first core 11C and the second core 12C.

For example, it is assumed that the second program 22 stored in the ROM 2 has been updated and the updated second program 22 is stored in the ROM 2. At this time, the third core 13C and the fourth core 14C that are included in the multi-core MPU 3C and that are executing the second program 22 are the cores corresponding to the update targets. The control circuit 4C outputs the second interrupt signal to the third core 13C and the fourth core 14C that are included in the multi-core MPU 3C and that are executing the second program 22. In a case where each of the third core 13C and the fourth core 14C has detected the second interrupt signal, each of the third core 13C and the fourth core 14C reloads the second program 22 that has been updated and that is stored in the ROM 2. At this time, each of the first core 11C and the second core 12C is able to continue the execution of the first program 21 even when the second program 22 is being updated by each of the third core 13C and the fourth core 14C.

### Operation of control device

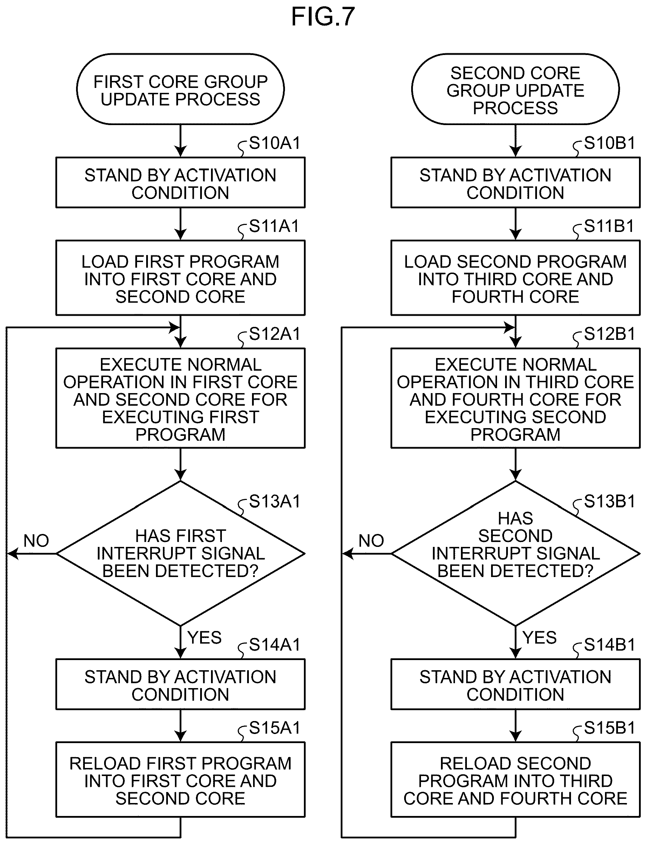

FIG. 7 is a flowchart illustrating one example of a processing operation that is performed in each of the first core group that is involved in the first core group update process and the second core group that is involved in the second core group update process. It is assumed that the multi-core MPU 3C executes in parallel the first core group update process involved by the first core group and the second core group update process involved by the second core group.

The first core group update process is a process of updating the first program 21 performed in each of the first core 11C and the second core 12C included in the first core group. In FIG. 7, each of the first core 11C and the second core 12C included in the first core group stands by, for example, in accordance with activation, until the activation condition that a device to be used becomes available is satisfied (Step S10A1). Further, the activation condition is an activation condition indicating that, for example, initialization of a register has been completed, or the like. Each of the first core 11C and the second core 12C stands by until the activation condition indicated at Step S10A1 is satisfied, and then, loads the first program 21 that has not been updated and that is stored in the ROM 2 (Step S11A1). Each of the first core 11C and the second core 12C executes the normal operation that executes the loaded first program 21 (Step S12A1).

Each of the first core 11C and the second core 12C determines whether or not the first interrupt signal has been detected during the execution of the normal operation (Step S13A1). In a case where each of the first core 11C and the second core 12C has detected the first interrupt signal (Yes at Step S13A1), each of the first core 11C and the second core 12C determines that the first program 21 stored in the ROM 2 has been updated, and stands by until a predetermined activation condition is satisfied (Step S14A1).

After having stood by until the predetermined activation condition is satisfied, each of the first core 11C and the second core 12C reloads the first program 21 that has been updated and that is stored in the ROM 2 (Step S15A1). Then, each of the first core 11C and the second core 12C proceeds to the process at Step S12A1 in order to start the normal operation that executes the updated first program 21.

Furthermore, in a case where each of the first core 11C and the second core 12C does not detect the first interrupt signal (No at Step S13A1), each of the first core 11C and the second core 12C proceeds to the process at Step S12A1 in order to execute the normal operation that executes the first program 21.

The second core group update process is a process of updating the second program 22 performed in each of the third core 13C and the fourth core 14C that are included in the second core group. Each of the third core 13C and the fourth core 14C included in the second core group stands by, for example, in accordance with activation, until the activation condition that a device to be used becomes available is satisfied (Step S10B1). Further, the activation condition is an activation condition indicating that, for example, initialization of a register has been completed, or the like. Each of the third core 13C and the fourth core 14C stands by until the activation condition indicates at Step S10B1 is satisfied, and then, loads the second program 22 that has not been updated and that is stored in the ROM 2 (Step S11B1). Each of the third core 13C and the fourth core 14C executes the normal operation that executes the loaded second program 22 (Step S12B1).

Each of the third core 13C and the fourth core 14C determines whether or not the second interrupt signal has been detected during the execution of the normal operation (Step S13B1). In a case where each of the third core 13C and the fourth core 14C has detected the second interrupt signal (Yes at Step S13B1), each of the third core 13C and the fourth core 14C determines that the second program 22 stored in the ROM 2 has been updated, and stands by until a predetermined activation condition is satisfied (Step S14B1).

After having stood by until the predetermined activation condition is satisfied, each of the third core 13C and the fourth core 14C reloads the second program 22 that has been updated and that is stored in the ROM 2 (Step S15B1). Then, each of the third core 13C and the fourth core 14C proceeds to the process at Step S12B1 in order to start the normal operation that executes the updated second program 22.

Furthermore, in a case where each of the third core 13C and the fourth core 14C does not detect the second interrupt signal (No at Step S13B1), each of the third core 13C and the fourth core 14C proceeds to the process at Step S12B1 in order to execute the normal operation that executed the second program 22.

In other words, each of the third core 13C and the fourth core 14C included in the second core group in the multi-core MPU 3C is able to continue the execution of the second program 22 even when the first program 21 is being updated with respect to each of the first core 11C and the second core 12C included in the first core group.

### Effects of fourth embodiment

The control circuit 4C included in the control device 1C according to the fourth embodiment outputs the first interrupt signal to the first core group in a case where the first program 21 stored in the ROM 2 has been updated. In a case where the first core group has detected the first interrupt signal, the first core group reloads the updated first program 21 from the ROM 2, and executes the reloaded first program 21. At this time, the first core group updates the first program 21, whereas the second core group continues to execute the second program 22. As a result of this, the control device 1C is able to continue the execution of the second program 22 that is running in the second core group included in the same multi-core MPU 3C while updating the first program 21 that is running in the first core group.

Furthermore, the control circuit 4C outputs the second interrupt signal to the second core group in a case where the second program 22 stored in the ROM 2 has been updated. In a case where the second core group has detected the second interrupt signal, the second core group reloads the updated second program 22 from the ROM 2, and executes the reloaded second program 22. At this time, the second core group updates the second program 22, whereas the first core group continues to execute the first program 21. As a result of this, the control device 1C is able to continue the execution of the first program 21 that is running in the first core group included in the same multi-core MPU 3C while updating the second program 22 that is running in the second core group.

Further, the case has been described as an example in which, in a case where each of the first core 11C and the second core 12C that are included in the first core group has detected the first interrupt signal, the control device 1C included in the fourth embodiment reloads at the same time the first program 21 from the ROM 2 with respect to the first core 11C and the second core 12C. However, the embodiments are not limited to this example. The first program 21 stored in the ROM 2 may be alternately reloaded by each of the first core 11C and the second core 12C included in the first core group, and an embodiment thereof will be described as a fifth embodiment.

### Fifth Embodiment

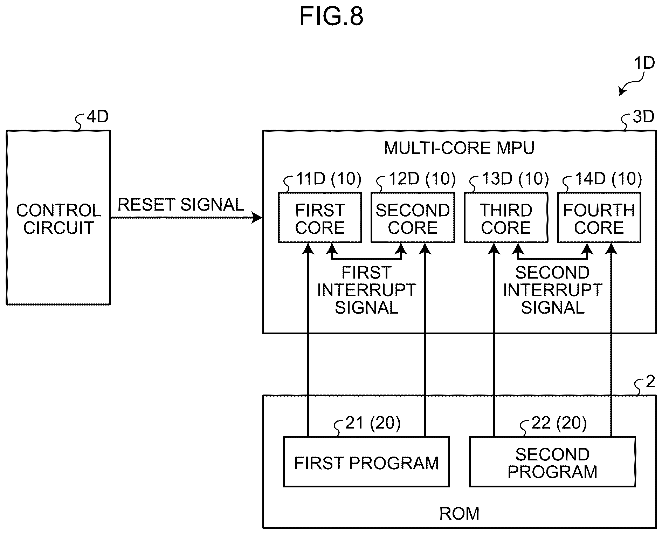

FIG. 8 is a block diagram illustrating one example of a control device 1D according to the fifth embodiment. Further, by assigning the same reference numerals to components having the same configuration as those in the control device 1C according to the fourth embodiment, overlapped descriptions of the configuration and the operation thereof will be omitted. The control device 1D illustrated in FIG. 8 is different from the control device 1C illustrated in FIG. 6 in that the operation mode and the standby mode are set by alternately being switched among the plurality of cores 10 included in the first core group. The operation mode is a mode in which the core 10 executes the program 20. The standby mode is a mode in which the core 10 suspends the execution of the program. Furthermore, an update of the first program 21 stored in the ROM 2 is detected by a first core 11D and a second core 12D included in a multi-core MPU 3D, and the first interrupt signal is output by the first core 11D and the second core 12D each other. An update of the second program 22 that is stored in the ROM 2 is detected by a third core 13D and a fourth core 14D included in the multi-core MPU 3D, and the second interrupt signal are output by the third core 13D and the fourth core 14D each other.

The first core group included in the multi-core MPU 3D includes the first core 11D and the second core 12D, and sets the second core 12D to be in the standby mode in a case where the first core group sets the first core 11D to be in the operation mode. Furthermore, in a case where the first core group sets the first core 11D to be in the standby mode, the first core group sets the second core 12D to be in the operation mode.

The second core group included in the multi-core MPU 3D includes the third core 13D and the fourth core 14D, and sets the fourth core 14D to be in the standby mode in a case where the second core group sets the third core 13D to be in the operation mode. Furthermore, in a case where the second core group sets the third core 13D to be in the standby mode, the second core group sets the fourth core 14D to be in the operation mode.

In a case where the first core 11D included in the first core group has detected an update of the first program 21 stored in the ROM 2 when the first core 11D is in the operation mode, the first core 11D outputs the first interrupt signal to the second core 12D. In a case where the second core 12D has detected the first interrupt signal received from the first core 11D when the second core 12D is in the standby mode, the second core 12D reloads the updated first program 21 stored in the ROM 2, and sets its mode to the operation mode.

After the second core 12D has set to be in the operation mode, the second core 12D outputs the first interrupt signal to the first core 11D. In a case where the first core 11D has detected the first interrupt signal received from the second core 12D when the first core 11D is in the standby mode, the first core 11D reloads the updated first program 21 that is stored in the ROM 2. In other words, the first core group is able to continue the execution of the first program 21 by the core 10 that is in the operation mode while updating the first program 21 by the core 10 that is in the standby mode from among the plurality of cores 10 that are included in the same core group.

In a case where the third core 13D included in the second core group has detected an update of the second program 22 stored in the ROM 2 when the third core 13D is in the operation mode, the third core 13D outputs the second interrupt signal to the fourth core 14D. In a case where the fourth core 14D has detected the second interrupt signal received from the third core 13D when the fourth core 14D is in the standby mode, the fourth core 14D reloads the updated second program 22 that is stored in the ROM 2, and sets its mode to the operation mode.

After the fourth core 14D has set to be in the operation mode, the fourth core 14D outputs the second interrupt signal to the third core 13D. In a case where the third core 13D has detected the second interrupt signal received from the fourth core 14D when the third core 13D is in the standby mode, the third core 13D reloads the second program 22 that has been updated and that is stored in the ROM 2. In other words, the second core group is able to continue the execution of the second program 22 by the core 10 that is in the operation mode while updating the second program 22 by the core 10 that is in the standby mode from among the plurality of cores 10 that are included in the same core group.

### Operation of control device

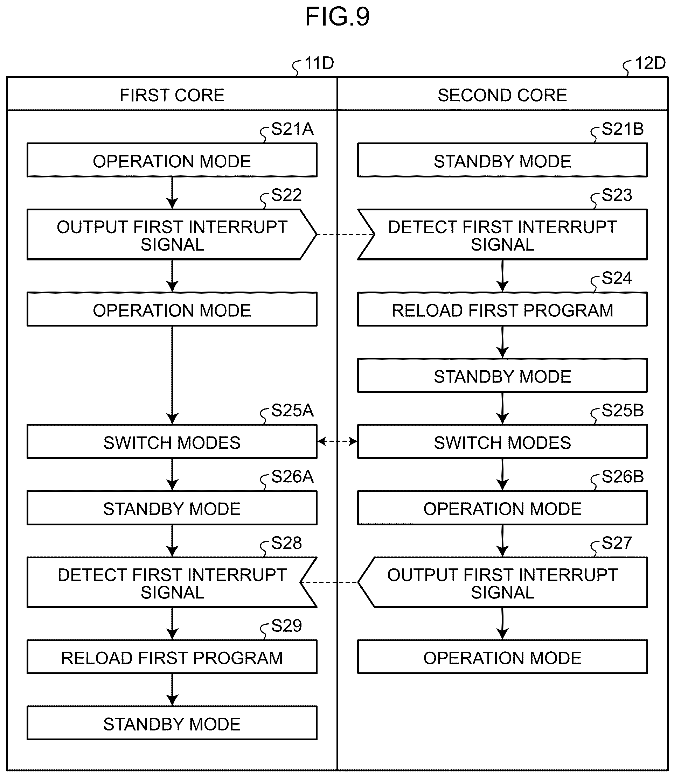

FIG. 9 is a flowchart illustrating one example of a processing operation performed in each of the first core 11D and the second core 12D included in the first core group involved in the third update process. Further, FIG. 9 illustrates a case of the first core group as an example, the same process is also performed in each of the third core 13D and the fourth core 14D included in the second core group.

The first core 11D included in the first core group sets its mode to the operation mode in which the first program 21 is executed (Step S21A), and the second core 12D included in the first core group sets its mode to the standby mode in which execution of the program is suspended (Step S21B).

In a case where the first core 11D has detected an update of the first program 21 stored in the ROM 2 when the first core 11D is in the operation mode, the first core 11D outputs the first interrupt signal to the second core 12D (Step S22). In a case where the second core 12D has detected the first interrupt signal received from the first core 11D (Step S23), the second core 12D reloads the first program 21 that has been updated and that is stored in the ROM 2 (Step S24).

When the first program 21 has been reloaded, the second core 12D performs mode switching (Step S25B). The second core 12D switches the mode from the standby mode to the operation mode in accordance with the mode switching (Step S26B). The first core 11D switches the mode from the operation mode to the standby mode in accordance with the mode switching (Step S25A) received from the second core 12D (Step S26A).

After the second core 12D has switched the mode to the operation mode, the second core 12D outputs the first interrupt signal to the first core 11D while maintaining the operation mode (Step S27). In a case where the first core 11D has detected the first interrupt signal received from the second core 12D while maintaining the standby mode (Step S28), the first core 11D reload the first program 21 that has been updated and that is stored in the ROM 2 (Step S29).

Then, in a case where the first core 11D has detected an update of the first program 21 stored in the ROM 2 when the first core 11D included in the first core group is in the operation mode and also when the second core 12D included in the first core group is in the standby mode, the first core 11D outputs the first interrupt signal to the second core 12D. In a case where the second core 12D has detected the first interrupt signal when the second core 12D is in the operation mode, the second core 12D reloads the updated first program 21. The second core 12D outputs the first interrupt signal to the first core 11D. Then, in a case where the first core 11D has detected the first interrupt signal when the first core 11D is in the standby mode, the first core 11D reloads the updated first program 21.

In other words, the control device 1D outputs the first interrupt signal to the second core 12D when the first core 11D included in the first core group is in the operation mode, and reloads the updated first program 21 with respect to the second core 12D. Then, after having reloaded the updated first program 21, the second core 12D sets its mode to the operation mode, and outputs the first interrupt signal to the first core 11D. In a case where the first core 11D has detected the first interrupt signal received from the second core 12D, the first core 11D reloads the updated first program 21.

### Effects of fifth embodiment

By alternately switching the first core 11D and the second core 12D that are included in the first core group, the control device 1D according to the fifth embodiment alternately reloads the updated first program 21 that is being stored in the ROM 2 with respect to the first core 11D and the second core 12D. As a result of this, the first core group is able to continue the execution of the first program 21 that is running in the core 10 in the operation mode while updating the first program 21 that is running in the core 10 in the standby mode from among the plurality of cores 10 that are included in the same core group.

By alternately switching the third core 13D and the fourth core 14D that are included in the second core group, the control device 1D alternately reloads the updated second program 22 that is being stored in the ROM 2 with respect to the third core 13D and the fourth core 14D. As a result of this, the second core group is able to continue the execution of the second program 22 that is running in the core 10 in the operation mode while updating the second program 22 that is running in the core 10 in the standby mode from among the plurality of cores 10 that are included in the same core group.

The control device 1D alternately updates the two programs 20 that are operating in the same core group included in the multi-core MPU 3D. As a result of this, the control device 1D is able to continue the execution of the program running in the core 10 in the operation mode while updating the program 20 that is running in the core 10 in the standby mode from among the plurality of cores 10 included in the same core group.

Further, the case has been described as an example in which the control device 1D has been constituted such that, in a case where each of the first core 11D and the second core 12D has detected an update of the first program 21 stored in the ROM 2, the first interrupt signal is input or output to and from the first core 11D and the second core 12D each other. However, the embodiments are not limited to this example, and appropriate modifications are possible. For example, in a case where a control circuit 4D included in the control device 1D has detected an update of the first program 21 stored in the ROM 2, the control circuit 4D may output the first interrupt signal to the second core 12D that is in the standby mode. In this case, in a case where the second core 12D has detected the first interrupt signal, the second core 12D reloads the first program 21, switches the mode from the standby mode to the operation mode, and notifies the control circuit 4D of completion of the reload. Then, in a case where the control circuit 4D has detected the completion of the reload from the second core 12D, the control circuit 4D outputs the first interrupt signal to the first core 11D that is switched into the standby mode. Then, the first core 11D may also reload the first program 21 from ROM 2 in accordance with the first interrupt signal received from the control circuit 4D, and appropriate modifications are possible.

Each of the control devices 1, 1A, 1B, 1C, and 1D is, for example, a control device for a distributed control system (DCS), a safety instrumented system (SIS), or the like.

According to one aspect of an embodiment, it is possible to continue execution of a program running in a core while updating a program running in another core.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A control device (1) comprising:
a read only memory (ROM) (2) that stores therein programs;
a processor (3) that includes a plurality of cores (10) that load the respective programs from the ROM and that execute the respective loaded programs; and
an output circuit (4) that outputs, in a case where one program out of the plurality of programs stored in the ROM has been updated, an interrupt signal to the core that executes the one program, wherein
the core reloads the updated program stored in the ROM in a case where the core has detected the interrupt signal.

2. The control device (1) according to claim 1, wherein the output circuit (4) is a control circuit that controls the processor (3) and that outputs, in a case where the one program out of the plurality of programs stored in the ROM (2) has been updated, the interrupt signal to the core (10) that executes the one program.

3. The control device (1) according to claim 1, wherein the output circuit (4) is another core that is included in the processor and that outputs, in a case where the one program out of the plurality of programs stored in the ROM (2) has been updated, the interrupt signal to the core (10) that executes the one program.

4. The control device (1) according to claim 1, wherein
in a case where the one program out of the plurality of programs stored in the ROM (2) has been updated, the output circuit (4) outputs the interrupt signal to each of the cores out of the plurality of cores that corresponds to an update target and that executes the program, and
in a case where each of the cores corresponding to the update target has detected the interrupt signal, each of the cores reloads the updated program that is being stored in the ROM.

5. The control device (1) according to claim 1, wherein
the processor (3) includes a first core (11) and a second core (12) each of which executes the same program,
in a case where the first core is in a standby mode in which execution of the program carried out in the second core is suspended, the first core sets to be in an operation mode in which the program is executed,
the second core sets to be in the operation mode in a case where the first core is in the standby mode,
the first core outputs the interrupt signal to the second core in a case where the first core has detected the interrupt signal when the first core is in the operation mode,
in a case where the second core has detected the interrupt signal received from the first core, the second core reloads the updated program from the ROM (2), switches the mode of the second core from the standby mode to the operation mode, and outputs the interrupt signal to the first core, and
in a case where the first core has detected the interrupt signal when the first core is in the standby mode, the first core reloads the updated program from the ROM.

6. An update method implemented by a control device (1) that includes
a read only memory (ROM) (2) that stores therein programs, and
a processor (3) that includes a plurality of cores (10) that load the respective programs from the ROM and that execute the respective loaded programs,
the update method comprising:
outputting, in a case where one program out of the plurality of programs stored in the ROM has been updated, an interrupt signal to the core that executes the one program; and
reloading the updated program stored in the ROM in a case where the core has detected the interrupt signal.
